# EUROPÄISCHE PATENTANMELDUNG

(11) **EP 2 952 453 A1**
(43) Veröffentlichungstag der Anmeldung: **09.12.2015**
(21) Anmeldenummer: 15174333.3
(22) Anmeldetag: 22.07.2011
(51) Int. Cl.: B65D 85/804

(54) **PORTIONSKAPSEL MIT KENNUNG**

(30) Priorität: 22.07.2010 DE 102010031988; 02.09.2010 DE 102010044251; 07.02.2011 DE 102011010534
(62) Teilanmeldung aus: 11740565.4
(71) Anmelder: K-fee System GmbH, 51469 Bergisch Gladbach (DE)
(72) Erfinder: Krüger, Marc, 51467 Bergisch Gladbach (DE)
(74) Vertreter: Wolff, Felix

(57) **Zusammenfassung**

Portionskapsel (1) zur Herstellung eines Getränks mit einem Basiselement (2), das einen Hohlraum (3) aufweist, in dem ein Getränkerohmaterial vorgesehen ist und der von einer Membran (4) verschlossen wird, die an dem Basiselement befestigt ist, wobei sie eine Kennung (5) aufweist, die es ermöglicht die jeweilige Portionskapsel zu individualisieren und wobei sie einen Randbereich und/oder Flansch (2.4) aufweist, wobei in dem Randbereich und/oder Flansch (2.4), insbesondere an dessen äußerem Umfang, zumindest abschnittsweise, ein Formschluss-, Reibschlussmittel und/oder Detektionsmittel (2.4.2) vorgesehen ist und das Formschluss-, Reibschlussmittel und/oder Detektionsmittel (2.4.2) ein Zahnkranz oder Zahnkranzsegment ist.

## Beschreibung

Die vorliegende Erfindung betrifft eine Portionskapsel zur Herstellung eines Getränkes mit einem Basiselement, das einen Hohlraum aufweist, in dem ein Getränkerohmaterial vorgesehen ist und der von einer Membran, die an dem Basiselement befestigt ist, verschlossen wird.

Derartige Portionskapseln sind hinlänglich bekannt und werden in einer Vielzahl von Ausführungsformen am Markt angeboten. Da sich diese Kapseln oftmals relativ ähnlich sind, kann es vorkommen, dass Kapseln eines Herstellers in Kaffeeautomaten eines anderen Herstellers verwendet werden, wofür sie nicht geeignet sind. Dadurch können sich erhebliche Sicherheitsprobleme ergeben und/oder der Kaffeeautomat kann beschädigt werden.

Es war deshalb die Aufgabe der vorliegenden Erfindung, eine Portionskapsel zur Verfügung zu stellen, die nur für einen ganz bestimmten Kaffeeautomaten geeignet ist.

Gelöst wird die Aufgabe mit einer Portionskapsel zur Herstellung eines Getränks mit einem Basiselement, das einen Hohlraum aufweist, in dem ein Getränkerohmaterial vorgesehen ist und der von einer Membran, die an dem Basiselement befestigt ist, verschlossen wird, wobei sie eine Kennung aufweist, die es ermöglicht, die jeweilige Portionskapsel zu individualisieren.

Die vorliegende Erfindung betrifft eine Portionskapsel zur Herstellung eines Getränkes oder Lebensmittels, welches einen Hohlraum aufweist, in dem ein Getränkerohmaterial vorgesehen ist. Eine derartige Portionskapsel wird beispielsweise aus Kunststoff, einem Naturstoff und/oder einem biologisch abbaubaren Werkstoff hergestellt und weist in der Regel ein Basiselement, insbesondere ein tiefgezogenes Basiselement, auf, das vorzugsweise kegelstumpfförmig oder zylindrisch geformt ist. In den Hohlraum der Portionskapsel wird das Getränkerohmaterial eingefüllt, das beispielsweise von einer Flüssigkeit, insbesondere Wasser, extrahiert und/oder aufgelöst wird.. Vorzugsweise wird das Basiselement nach dem Einfüllen des Getränkerohmaterials, insbesondere mit einer Membran verschlossen. Die Membran ist vorzugsweise dem Boden des Basiselementes gegenüberliegend vorgesehen. Die Membran kann aus demselben oder einem unterschiedlichen Werkstoff als das Basiselement gefertigt sein und wird vorzugsweise durch Siegeln und/oder Kleben an dem Basiselement befestigt. Desweiteren können in dem Hohlraum ein oder mehrere Einbauelemente, wie beispielsweise ein Filter, ein Flüssigkeitsverteiler, ein Vlies, ein Filz, eine Absperrfolie und/oder dergleichen vorgesehen werden. Für den Fall, dass ein Filz und ein Vlies vorgesehen sind, sind diese vorzugsweise miteinander verbunden. Der Flitz und/oder das Vlies können mehrlagig vorgesehen werden, wobei sich die Lagen in der Art des verwendeten Ausgangsmaterials und/oder dessen Verarbeitung unterscheiden können. Die Membran und/oder der Boden können mit mehreren Ausnehmungen (Löchern) versehen sein.

Erfindungsgemäß ist nun vorgesehen, dass diese Portionskapsel eine Kennung aufweist, die es ermöglicht, die jeweilige Portionskapsel zu individualisieren. Individualisieren im Sinne der Erfindung bedeutet vorzugsweise, dass die jeweilige Portionskapsel einer Gruppe zugeordnet werden kann, die für den jeweiligen Kaffeeautomaten geeignet ist. Es ist nicht nötig, dass der Kaffeeautomat erkennt, um welche Portionskapsel es sich speziell handelt, sondern lediglich erkennt, dass die jeweilige Portionskapsel zu einer Gruppe von Portionskapseln gehört, die für den jeweiligen Kaffeeautomaten geeignet ist. Individualisieren bedeutet insbesondere, dass Portionskapseln, die nicht für den jeweiligen Kaffeeautomaten geeignet, in diesen nicht einführbar sind und/oder direkt wieder herausfallen und/oder dass der Kaffeeautomat nur mit richtigen Kapseln in Betrieb zu nehmen ist. Vorzugsweise erfasst ein an dem Kaffeeautomaten vorgesehener Sensor/Detektionsmittel diese Kennung und vergleicht sie vorzugsweise mit einer abgespeicherten Kennung. Vorzugsweise ist der Kaffeeautomat nur dann in Betrieb zu nehmen, insbesondere seine, das Wasser zur Verfügung stellende Druckpumpe, wenn die ermittelte Kennung mit der Referenzkennung übereinstimmt. Andernfalls ist der Kaffeeautomat nicht in Betrieb zu nehmen. Vorzugsweise ist das Detektionsmittel im Bereich des Einwurfschachtes des Kaffeeautomaten für die Portionskapseln vorgesehen. In einer anderen bevorzugten Ausführungsform ist das Detektionsmittel im Bereich der Brühkammer vorgesehen. Alternativ verhindert die Kennung ein Einführen der Kapsel in den Kaffeeautomat. Alternativ oder zusätzlich sind insbesondere in dem Einwurfschacht Mittel, insbesondere mechanische Mittel, besonders bevorzugt ein oder mehrere Zahnräder vorgesehen, die verhindern, dass eine falsche Portionskapsel in den Kaffeeautomaten, insbesondere den Einwurfschacht, gelangt.

Vorzugsweise handelt es sich bei der Kennung um Flächenbereiche mit unterschiedlichen optischen, beispielsweise Reflexionseigenschaften. Diese Flächen können auf der Membran, der Seitenwand und/oder dem Boden der Portionskapseln vorgesehen werden. Vorzugsweise weist die Portionskapsel mindestens zwei Bereiche auf, die sich in ihren optischen Eigenschaften, beispielsweise den Reflexionseigenschaften unterscheiden.

Weiterhin bevorzugt ist die Erkennung einer Einbuchtung und/oder einer Ausbuchtung. Vorzugsweise liegen Ein- und Ausbuchtungen im Wechsel vor und/oder es liegen mindestens zwei Ein- oder Ausbuchtungen getrennt voneinander vor. Ganz besonders bevorzugt handelt es sich bei den Ein- und/oder Ausbuchtungen um einen Zahnkranz, der an dem äußeren Umfang des Randes und/oder zumindest abschnittsweise an dem Wandbereich der Portionskapsel vorgesehen ist. Die Ein- und/oder Ausbuchtung kann vorzugsweise durch jedes formgebende Verfahren beispielsweise durch Tiefziehen hergestellt werden. Weiterhin kann die Einbuchtung durch einen Materialabtrag, insbesondere durch Stanzen oder mittels eines Lasers, bewerkstelligt werden, wobei bei dieser bevorzugten Ausführungsform der vorliegenden Erfindung darauf zu achten ist, dass eine eventuelle in dem Portionskapselmaterial vorhandene Sperrschicht, die beispielsweise verhindert, dass Feuchtigkeit oder Aroma aus der Kapsel entweicht und/oder Wasserdampf oder Sauerstoff in die Kapsel eindringt, nicht beschädigt wird. Das Auslesen der Kennung, die in der Ein- und/oder Ausbuchtung verschlüsselt ist, kann beispielsweise durch ein mechanisches und/oder optisches Verfahren erfolgen. Die Kennung kann aber alternativ oder zusätzlich dazu eingesetzt werden zu verhindern, dass die Portionskapsel in den Kaffeeautomaten eingeführt, insbesondere in den Einwurfschacht eingeführt werden kann. Dies kann beispielsweise mit einem Zahnkranz am Umfang der Portionskapsel und/oder deren Rand erzielt werden, indem ein in dem Einwurfschacht vorgesehenes Zahnrad sich nur drehen lässt und damit die Portionskapsel passieren lässt, wenn deren Zahnkranz mit den Zähnen des Zahnrades kompatibel ist, beispielsweise dieselbe Zahnform und/oder Teilung aufweist.

In einer weiteren bevorzugten Ausführungsform der vorliegenden Erfindung ist die Kennung in der Membran vorgesehen. Vorzugsweise ist die Kennung eine Schicht oder Teilschicht der Membran. Bei dieser Art der Kennung kann es sich beispielsweise um ein optisch erkennbares Material, beispielsweise ein fluoreszierendes Material, handeln. Weiterhin kann es sich um eine Kennung in Form einer Metallschicht oder Ferrometallschicht bzw. in Form von Metall- oder Ferrometallstreifen in oder auf der Membran handeln.

Weiterhin bevorzugt ist die Kennung ein maschinenlesbarer Aufdruck. Dieser Aufdruck erfolgt vorzugsweise mit einer im Lebensmittelbereich zugelassenen Farbe. Weiterhin bevorzugt sind fluoreszierende Materialen als Druckmaterial oder Druckmaterialen, deren optische Eigenschaften sich unter Temperatureinfluss verändern. Vorzugsweise ist der Aufdruck ein Barcode, ein Logo oder ein Rapport.

In einer weiteren bevorzugten Ausführungsform ist die Kennung ein elektrisch leitender Bereich, der überall auf der Kapsel, vorzugsweise jedoch in und/oder auf deren Seitenwand, Rand und/oder Boden vorgesehen wird. Durch diesen elektrisch leitenden Bereich wird in einem, wie auch immer gestalteten Stromkreis, eine messbare Veränderung bewirkt, die dann zur Erkennung der jeweiligen Portionskapsel führt.

In einer weiteren bevorzugen Ausführungsform ist die Kennung ein ferromagnetischer Bereich.

Weiterhin bevorzugt ist die Kennung über einen RFID-Chip.

Mit der erfindungsgemäßen Portionskapsel ist es möglich, zu verhindern, dass Portionskapseln, die nicht für einen bestimmten Kaffeeautomaten vorgesehen sind, in diesen eingeführt werden. Weiterhin ist es anhand der Kennung möglich, dass der Kaffeeautomat erkennt, welche Art von Kapsel sich in seiner Brühkammer befindet und den Getränke- oder Lebensmittelherstellungsprozess d. h. beispielsweise die Menge an Wasser, deren Druck und/oder deren Temperatur entsprechend einstellt.

Gemäß einem weiteren Gegenstand der vorliegenden Erfindung ist im Bodenbereich, durch Materialabtrag, beispielsweise mittels eines Lasers, eine Schwächung vorgesehen. Diese Schwächung ist insbesondere in dem Bereich des Bodens der Kapsel vorgesehen, der für die Herstellung des Getränkes von einem Dorn durchstochen wird. Dadurch, dass die Folie im Bereich des Dorns beispielsweise durch Materialabtrag mittels eines Lasers geschwächt ist, ist der Kraftaufwand, der zum Durchstoßen der Folie benötigt wird, geringer. Der Dorn eines entsprechenden Kaffeeautomaten kann eine Kraftbegrenzung beispielsweise in Form einer Feder aufweisen, die die Kraft begrenzt mit der der Dorn gegen den Portionskapselboden drücken kann. Dadurch wird vermieden, dass Kapseln die eine entsprechende Schwächung nicht aufweisen in einem entsprechenden Kaffeeautomaten zum Einsatz kommen können. Die Schwächung stellt folglich ebenfalls eine Kennung dar.

Gemäß einem weiteren oder einem bevorzugten Gegenstand der vorliegenden Erfindung weist die Portionskapsel einen Randbereich auf, der vorzugsweise an dem Basiselement vorgesehen ist. Vorzugsweise ist der Rand an dem dem Boden gegenüberliegenden Bereich des Basiselementes vorgesehen. An diesem Randbereich kann beispielsweise eine Membran zum Verschließen des Basiselementes angeordnet werden, nachdem das Rohmaterial in die Portionskapsel eingefüllt ist. Der Rand kann aber auch dazu dienen, die Kapsel in einem Einwurfschacht so zu führen, dass sie in einer ganz bestimmten Lage in eine Brühkammer fällt. Gleichzeitig kann der Rand als Anschlags- und/oder Dichtungsfläche dienen.

Vorzugsweise weist die Portionskapsel in dem Randbereich, insbesondere an dessen äußerem Umfang, zumindest abschnittsweise ein Formschluss-, Reibschluss- und/oder Detektionsmittel auf. Mit diesem Form- und/oder Reibschlussmittel können beispielsweise komplementäre Mittel, die sich im Bereich des Kaffeeautomaten befinden, angetrieben werden, um zu ermöglich, dass die Portionskapsel in den Kaffeeautomaten eingeführt werden kann und/oder um einen Sensor, beispielsweise ein Zahnrad, anzutreiben, der ein Signal an eine Maschinensteuerung sendet in Abhängigkeit davon, ob es sich um die richtige oder die falsche Portionskapsel handelt. Alternativ oder zusätzlich können diese Formschluss-, Reibschluss- und/oder Detektionsmittel jedoch auch von einem Detektor erfasst werden, um festzustellen, ob die jeweilige Portionskapsel für den jeweiligen Kaffeeautomaten geeignet ist.

Vorzugsweise handelt es sich bei dem Formschluss-, Reibschluss- und/oder Detektionsmittel um einen Zahnkranz oder Zahnkranzsegment, das insbesondere am äußeren Umfang des Randes vorgesehen ist. Die Zähne dieses Zahnkranzes oder Zahnkranzsegmentes können jede beliebige - dem Fachmann beispielsweise aus dem Getriebebau - geläufige Form aufweisen. Vorzugsweise sind die Zähne jedoch dreiecksförmig, rechteckförmig, quadratisch oder wellenförmig vorgesehen.

Vorzugsweise ist bezogen auf den Zahnkranz bzw. das Zahnkranzsegment innenliegend eine Dichtfläche vorgesehen.

Ein weiterer oder bevorzugter Stand der Technik ist ein Portionskapsel zur Herstellung eines Getränks, aufweisend ein im Wesentlichen kegelstumpfförmiges oder zylindrisches Basiselement, welches einen Hohlraum zur Aufnahme eines Getränkerohmaterials aufweist, und eine den Hohlraum verschließende Membran, wobei das Basiselement einen Wandungsbereich aufweist und das Basiselement ferner auf der der Membran abgewandten Seite der Portionskapsel einen Bodenbereich aufweist, wobei der Wandungsbereich eine Mehrzahl von Rillen aufweist und die Rillen zwischen der Membran und dem Bodenbereich über wenigstens einen Teil der Höhenerstreckung des Wandungsbereichs verlaufend vorgesehen sind. Die Rillen können auch in dem Randbereich der Portionskapsel, insbesondere an dessen äußerem Umfang vorhanden sein.

Diese Portionskapsel hat gegenüber der Portionskapsel gemäß dem Stand der Technik beispielsweise den Vorteil, dass der Wandungsbereich des Basiselements durch die Mehrzahl von Rillen versteift ist. Dies hat zum einen den Vorteil, dass die Portionskapsel eine höhere mechanische Stabilität aufweist und somit eine Deformation und insbesondere ein seitliches Einknicken der Portionskapsel verhindert wird. Ein weiterer Vorteil der erfindungsgemäßen Portionskapsel ist, dass sich durch die Anordnung von Rillen im Wandungsbereich des Basiselements ein verbessertes Verhalten beim Durchströmen der Portionskapsel mit der Extraktionsflüssigkeit in der Brühkammer ergibt, weil es durch die Anordnung der Rillen, insbesondere durch ihren Verlauf zwischen der Membran und dem Bodenbereich über wenigstens einen Teil der Höhenerstreckung des Wandungsbereichs, möglich ist, die Qualität und die Zuverlässigkeit des Extraktionsvorgangs erheblich zu steigern ist. Insbesondere ist es erfindungsgemäß vorteilhaft möglich, dass durch die Erhöhung der mechanischen Stabilität durch die Verwendung der Mehrzahl von Rillen die Materialstärke des Basiselements insgesamt reduziert werden kann. Die Produktion der Portionskapsel wird somit erheblich kostengünstiger und umweltfreundlicher. Andererseits wird in der Brühkammer durch die Mehrzahl der Rillen eine Anhaftung des Wandungsbereichs an die Brühkammerwandung reduziert bzw. vermieden, wodurch das Auswerfen oder Entnehmen der Portionskapsel aus der Brühkammer begünstigt wird. Ein weiterer Vorteil der Mehrzahl von Rillen ist, dass innerhalb des Hohlraums die Strömung der Extraktionsflüssigkeit entlang des Basisbereichs durch die Rillenstruktur im Wandungsbereich optimiert gestaltet werden kann, so dass sich durch Formgebung der Rillenstruktur beispielsweise eine bessere bzw. stärkere Verwirbelung der Extraktionsflüssigkeit im Hohlraum oder aber eine gleichmäßigere (laminare) Strömung der Extraktionsflüssigkeit ergibt bzw. mit einfachen Mitteln realisiert werden kann. Eine im Vergleich zum Stand der Technik stärkere Verwirbelung der Extraktionsflüssigkeit im Hohlraum hat gegenüber dem Stand der Technik den Vorteil, dass sich keine ungewollten und zufälligen Hauptflüssigkeitsströme durch das Bett des Getränkerohmaterials bilden, sondern stattdessen das Getränkerohmaterial in seinem gesamten Volumen durchströmt wird. Der Extraktionsvorgang wird somit wesentlich effizienter und ist präziser zu steuern bzw. reproduzierbarer.

Das Getränkerohmaterial umfasst insbesondere Kaffeepulver (vorzugsweise gemahlenen Röstkaffee), Schokoladenpulver, Milchpulver, Tee oder dergleichen. Alternativ ist denkbar, dass das Getränkerohmaterial ein Getränkeextrakt, wie beispielsweise Instant-Kaffee umfasst.

Die Rillen sind insbesondere Ausbuchtungen und/oder Einbuchtungen, welche vorzugsweise eine lineare Haupterstreckungsrichtung aufweisen, die sich vorzugsweise entlang dem Wandungsbereich oder des Umfangs des Randes erstrecken. Besonders bevorzugt sind die Rillen als Stege und/oder Nuten oder ausgebildet. Durch die Rillen ergibt sich beispielsweise ein Zahnkranz. Die Rillen sind dabei optional auf einer dem Hohlraum zugewandten Innenseite und/oder auf einer dem Hohlraum abgewandten Außenseite des Basiselements ausgebildet.

Gemäß einer bevorzugten Ausführungsform der vorliegenden Erfindung ist es vorgesehen, dass die Rillen eine Kennung realisieren, die es ermöglicht, die Portionskapsel zu individualisieren. Individualisieren im Sinne der vorliegenden Erfindung bedeutet vorzugsweise, dass die jeweilige Portionskapsel einer Gruppe zugeordnet werden kann, die für den jeweiligen Kaffeeautomaten bzw. für das jeweilige Gerät geeignet ist, mit welchem ein Getränk hergestellt wird.. Es ist nicht nötig, dass der Kaffeeautomat bzw. die Vorrichtung zur Herstellung eines Getränks unter Verwendung der erfindungsgemäßen Portionskapsel erkennt, um welche Portionskapsel es sich speziell handelt, sondern lediglich, dass die jeweilige Portionskapsel zu einer Gruppe von Portionskapseln gehört, die für die jeweilige Vorrichtung zur Herstellung des Getränks, insbesondere einen Kaffeeautomaten, geeignet ist. Individualisieren bedeutet insbesondere, dass Portionskapseln, die nicht für den jeweiligen Kaffeeautomaten (bzw. die jeweilige Vorrichtung zur Herstellung des Getränks) geeignet sind, in diesen nicht einführbar sind und/oder direkt wieder herausfallen und/oder dass die Vorrichtung zur Herstellung des Getränks bzw. der Kaffeeautomat nur mit erfindungsgemäßen Portionskapseln ("richtigen Kapseln") in Betrieb zu nehmen ist und dass ein bestimmungsgemäßer und ordnungsgemäßer Betrieb der Vorrichtung zur Herstellung des Getränks bzw. des Kaffeeautomaten nicht möglich ist, wenn nicht die individualisierbaren bzw. erfindungsgemäßen Portionskapseln verwendet werden. Vorzugsweise ist es erfindungsgemäß vorgesehen, dass ein an dem Kaffeeautomaten bzw. der Vorrichtung zur Herstellung des Getränks vorgesehener Sensor bzw. ein Detektionsmittel, diese Kennung erfasst und mit einer vorzugsweise abgespeicherten Kennung vergleicht. Dieser Erkennungs- bzw. Vergleichsvorgang kann in besonders bevorzugter Weise auch auf einer mechanischen Passung beruhen, insbesondere einer Passung eines Zahnrades bzw. einer zahnradähnlichen Kontur, die sich in der Vorrichtung zur Herstellung des Getränks bzw. in dem Kaffeeautomaten befindet und mit der Portionskapsel zusammenwirkt. Vorzugsweise ist die Vorrichtung zur Herstellung des Getränks bzw. der Kaffeeautomat nur dann in Betrieb zu nehmen, wenn die ermittelte Kennung mit der Referenzkennung übereinstimmt bzw. wenn die mechanische Passung übereinstimmt. Insbesondere ist lediglich in diesem Fall die Vorrichtung zur Herstellung des Getränks in Betrieb zu nehmen, insbesondere eine Druckpumpe bzw. Wasserpumpe zu aktivieren. Andernfalls ist der Kaffeeautomat bzw. die Vorrichtung zur Herstellung des Getränks nicht in Betrieb zu nehmen. Vorzugsweise ist das Detektionsmittel bzw. das Element zur Herstellung einer mechanischen Passung im Bereich des Einwurfschachtes des Kaffeeautomaten bzw. der Vorrichtung zur Herstellung des Getränks für die Portionskapseln vorgesehen. Alternativ kann es auch vorgesehen sein, dass die Kennung bzw. die mechanische Passung verhindert, dass die nicht passende Portionskapsel in die Vorrichtung zur Herstellung des Getränks eingeführt wird. Mit der erfindungsgemäßen Portionskapsel ist es möglich, zu verhindern, dass Portionskapseln, die nicht für eine bestimmte Vorrichtung zur Herstellung eines Getränks vorgesehen sind, in diese eingeführt werden. Weiterhin ist es anhand der Kennung möglich, dass die Vorrichtung zur Herstellung des Getränks, insbesondere der Kaffeeautomat erkennt, welche Art von Portionskapsel sich in seiner Brühkammer befindet und den Getränke- oder Lebensmittelherstellungsprozess, d. h. beispielsweise die Menge an Wasser, dessen Druck und/oder dessen Temperatur, entsprechend einstellt.

Gemäß einer weiteren bevorzugten Ausführungsform der vorliegenden Erfindung ist vorgesehen, dass zumindest ein Teil der Rillen und zumindest in einem Teilbereich in einer Ebene parallel zur Haupterstreckungsebene der Membran eine zahnradförmige Kontur aufweisen.

Hierdurch ist es erfindungsgemäß in vorteilhafter Weise möglich, dass bei ansonsten gleichen Voraussetzungen wie etwa Materialstärke oder dergleichen beispielsweise der Wandungsbereich der Portionskapsel stabiler ausgeführt werden kann, eine optimalere Verwirbelung der Extraktionsflüssigkeit und damit eine Verbesserung des Extraktionsprozesses herbeigeführt werden kann und ferner auch in einfacher Weise eine mechanische Kennung bzw. eine mechanische Passung der Portionskapsel mit einem Passungselement der Vorrichtung zur Herstellung eines Getränks realisierbar ist. Insbesondere ist es erfindungsgemäß dadurch vorteilhaft möglich, dass beispielsweise ein Zahnrad, welches in der Vorrichtung zur Herstellung eines Getränks angeordnet ist, beispielsweise im Bereich eines Einführschachtes oder dergleichen, mit der Zahnradkontur der Portionskapsel zusammenwirkt und damit eine mechanische Passung realisiert wird, die dazu führt, dass erkannt wird, dass es sich bei der Portionskapsel um eine zulässige Portionskapsel handelt und/oder erkannt wird, um welche Art von Portionskapsel es sich handelt und/oder eine Drehung der Portionskapsel um eine im Wesentlichen senkrecht zur Erstreckungsebene der Membran verlaufende Rotationsachse der Portionskapsel mit Hilfe der Zahnradanordnung herbeizuführen. Insbesondere ist es hierdurch erfindungsgemäß vorteilhaft möglich, dass die Portionskapsel immer in einer definierten Drehposition von der Vorrichtung zur Herstellung eines Getränks geöffnet und damit der Extraktionsprozess immer in gleicher Weise realisiert wird. Weiterhin ist es möglich, dass durch die Rillen ein Einführen der Portionskapsel in den Kaffeeautomaten verhindert wird.

Bevorzugt ist ferner vorgesehen, dass das Basiselement vom Bodenbereich abgewandt einen Flansch/Randbereich zur Befestigung der Membran an dem Basiselement aufweist, wobei der Wandungsbereich zwischen dem Bodenbereich in dem Flansch/Randbereich vorzugsweise einen Absatz aufweist, wobei die Rillen sich vorzugsweise zumindest über einen Teil des Absatzes erstrecken.

Hierdurch ist es erfindungsgemäß in vorteilhafter Weise ferner möglich, dass zum einen der Wandungsbereich besonders stabil und verstärkt ausgeführt wird und zum anderen die zahnradförmige Kontur der Rillen im Wandungsbereich derart ausgebildet ist, dass eine vergleichsweise hohe mechanische Last aufgenommen werden kann, sodass eine Drehung der Portionskapsel in der Vorrichtung zur Herstellung eines Getränks in einfacher Weise und ohne Beschädigung der Portionskapsel möglich ist.

Vorzugsweise weist das Basiselement im Bereich des Absatzes einen größeren Durchmesser auf als im Wandungsbereich zwischen dem Absatz und dem Bodenbereich.

Hierdurch ergibt sich in vorteilhafter Weise eine besonders einfache und robuste Möglichkeit, eine Stapelbarkeit der Portionskapseln bzw. eine Stapelbarkeit des Basiselements der Portionskapseln herbeizuführen.

Ferner ist es bevorzugt, wenn zumindest ein Teil der Rillen und zumindest in einem Teilbereich in einer Ebene parallel zur Haupterstreckungsebene der Membran eine zahnradförmige Kontur derart aufweisen, dass sich die zahnradförmige Kontur zumindest teilweise im Bereich des Absatzes oder des Flansches/Randbereichs erstreckt.

Weitere bevorzugte Ausführungsformen der vorliegenden Erfindung betreffen Varianten der Portionskapsel, bei denen eines oder mehrere der folgenden Merkmale realisiert ist/sind:
- das Basiselement verjüngt sich im Bereich des Absatzes in Richtung zum Flansch hin,
- die Rillen erstrecken sich über den Bereich des Absatzes in Richtung zum Bodenbereich hin,
- die Rillen erstrecken sich im Wandungsbereich über etwas 20 % - 80 %, bevorzugt über etwa 40 % - 60 %, der Erstreckung zwischen dem Absatz und dem Bodenbereich,
- die Rillen sind derart ausgebildet, dass mittels der Rillen der Wandungsbereich versteift ist und/oder dass durch die Rillen eine Verwirbelung einer in dem Hohlraum strömenden Extraktionsflüssigkeit vorgesehen ist.

Weitere bevorzugte Ausführungsformen der vorliegenden Erfindung betreffen eine Realisierung der Portionskapsel mit einem Verhältnis des Durchmessers des an den Flansch/Randbereich angrenzenden Wandungsbereichs einerseits zum Durchmesser des Flansches andererseits zwischen 0,85 und 0,89, insbesondere im Wesentlichen 0,87. Ferner ist erfindungsgemäß vorteilhaft vorgesehen, dass der Durchmesser des an den Flansch angrenzenden Wandungsbereichs im Wesentlichen 39 mm und/oder der Durchmesser des Flansches im Wesentlichen 45 mm beträgt. Ferner ist erfindungsgemäß bevorzugt vorgesehen, dass das Basiselement im Bereich des Absatzes eine größere Wandstärke aufweist als im Wandungsbereich zwischen dem Bodenbereich und dem Flansch. Hierdurch ist es aufgrund der verbesserten Stabilität aufgrund der Formgebung der Portionskapsel mit den Rillen im Wandungsbereich möglich, eine erhebliche Materialeinsparung und damit Kosten und Energieaufwand zur Herstellung der Portionskapsel zu reduzieren.

Ferner ist es erfindungsgemäß auch bevorzugt vorgesehen, dass innerhalb des Hohlraums ein Filterelement angeordnet ist, welches den Hohlraum in einen ersten Bereich zur Ordnung des Getränkerohmaterials und in einen zweiten Bereich zur Aufnahme eines Getränkeextrakts unterteilt, wobei es besonders bevorzugt vorgesehen ist, dass das Filterelement ein Vliesmaterial umfasst.

Ein weiterer Gegenstand der vorliegenden Erfindung ist die Verwendung einer erfindungsgemäßen Portionskapsel zur Herstellung eines Heißgetränks.

Im Folgenden wird die Erfindung anhand der Figuren 1 - 22 erläutert. Diese Erläuterungen schränken den allgemeinen Erfindungsgedanken nicht ein.
**Figur 1** zeigt eine Portionskapsel mit unterschiedlichen optischen Bereichen.
**Figur 2** zeigt eine Portionskapsel mit einem Barcode.
**Figur 3** zeigt eine Portionskapsel mit Ein- und Ausbuchtungen.
**Figur 4** zeigt eine Portionskapsel mit unterschiedlichen optischen Bereichen.
**Figur 5** zeigt einen Kapselkörper mit einer Schlüsselfunktion.
**Figur 6** zeigt eine elektrisch leitende Kapselwand.
**Figur 7** zeigt eine Portionskapselwand mit unterschiedlichen optischen Eigenschaften.
**Figur 8** zeigt einen verbreiterten Topfansatz der Kapselwand.
**Figur 9** zeigt einen elektrisch leitenden Randbereich.
**Figur 10** zeigt eine Kapsel mit einem elektrisch leitenden Kapselboden.
**Figur 11** zeigt eine Ausführungsform mit einer von einem Metalldetektor zu detektierenden Schicht.
**Figur 12** zeigt ein metallisches Sieb.
**Figur 13** zeigt eine Portionskapsel mit einem ferromagnetischen Bereich.
**Figur 14** zeigt eine Portionskapsel mit einem Barcode.
**Figur 15** zeigt eine Portionskapsel mit einem elektrisch leitenden Bereich in der Wandung.
**Figur 16** zeigt eine Portionskapsel mit einem Zahnkranz in der Brühkammer.
**Figuren 17** **a - c** zeigen unterschiedliche Ausführungsformen der Portionskapsel gemäß
Figur 16.

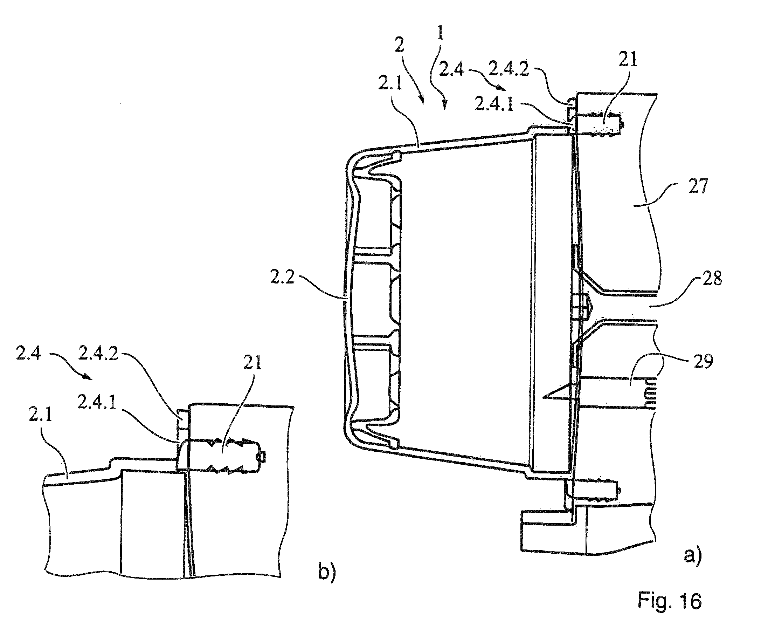

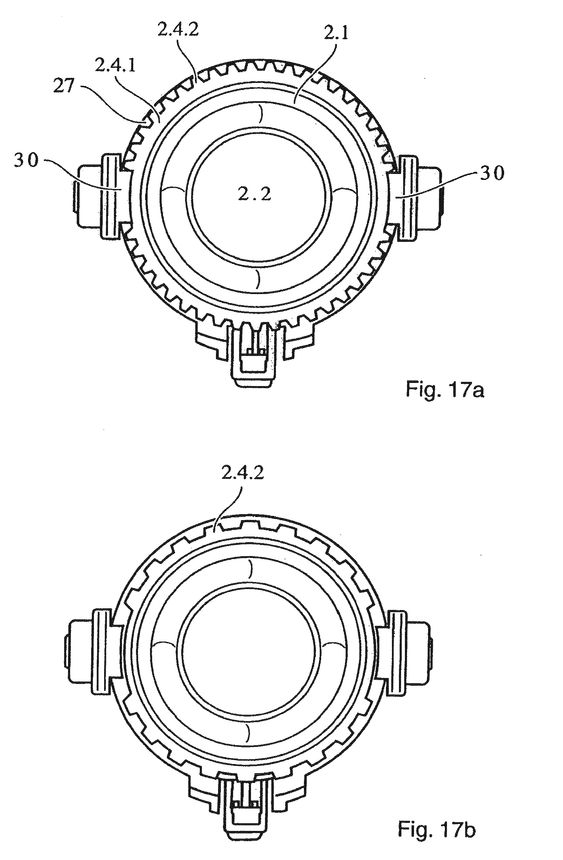

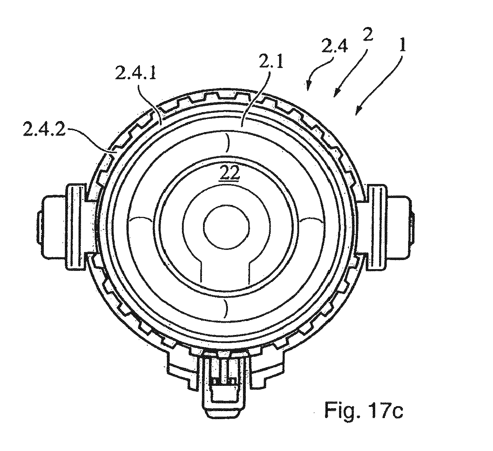

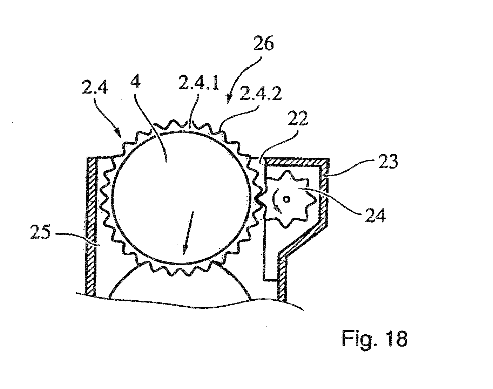

**Figur 18** zeigt die Portionskapsel gemäß den Figuren 16 und 17 im Formschluss mit einem Zahnrad.

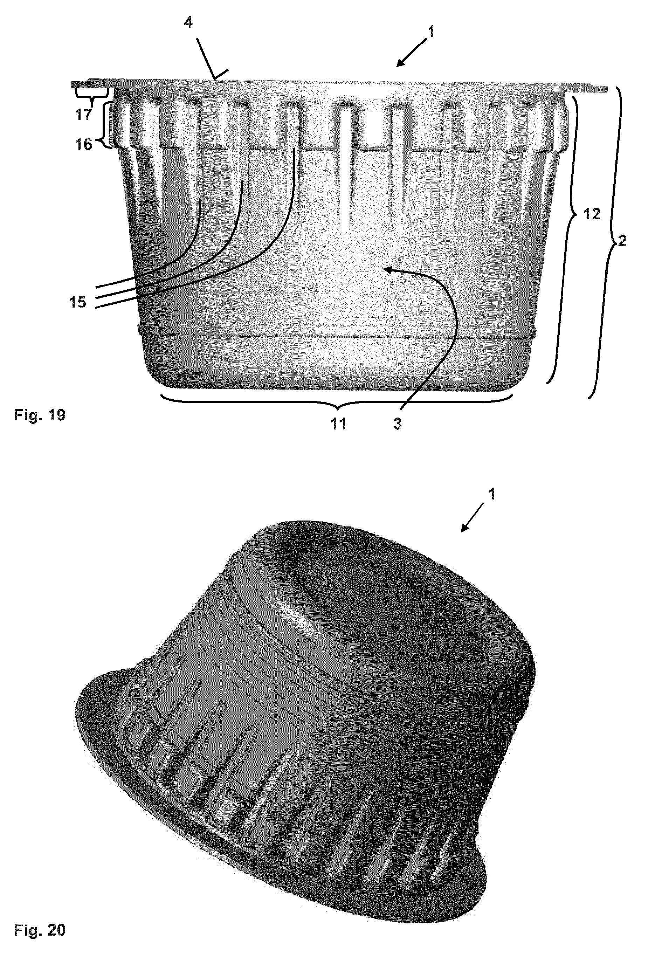

**Figuren 19 und 20** zeigen schematisch Ansichten einer erfindungsgemäßen Portionskapsel gemäß einer Ausführungsform der vorliegenden Erfindung.

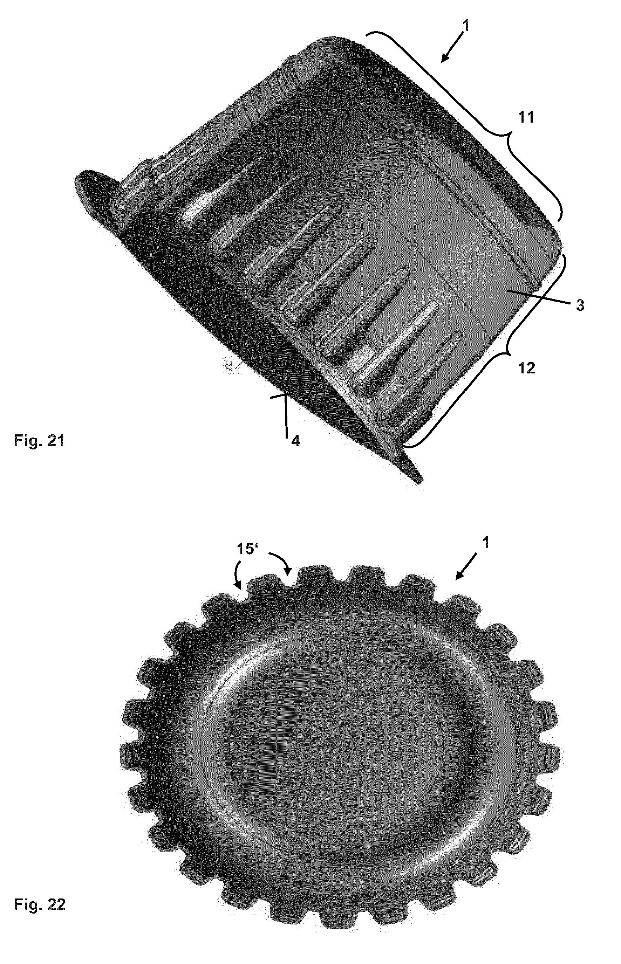

**Figuren 21 und 22** zeigen schematisch zwei Schnittansichten der erfindungsgemäßen Portionskapsel.

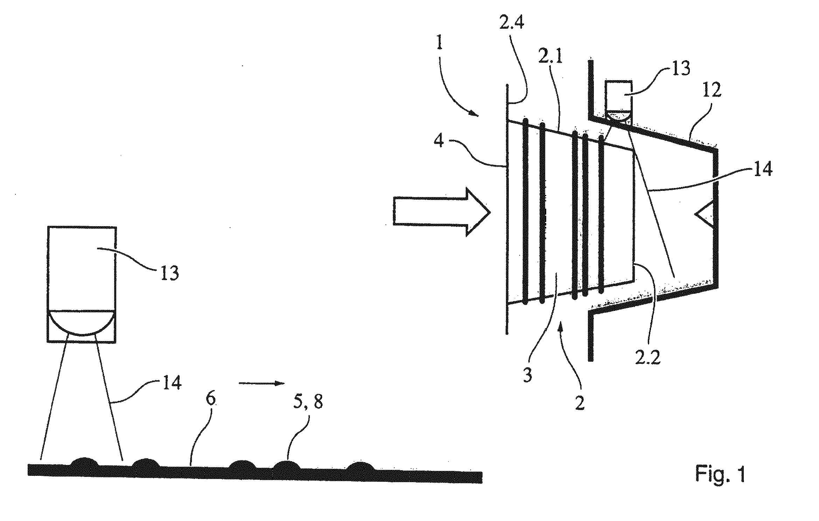

**Figur 1** zeigt in der rechten Darstellung eine Portionskapsel 1, die ein Basiselement 2 mit einer Wandung 2.1 und einem Bodenbereich 2.2 aufweist. Die Wandung 2.1 und der Boden 2.2 definieren einen Hohlraum, in den ein Getränkerohmaterial und ggf. ein Einbauelement vorgesehen werden können. Dieser Hohlraum wird nach dessen Befüllung von einer Membran verschlossen, die vorzugsweise mit dem Randbereich 2.4 des Basiselements beispielsweise durch Siegeln oder Kleben verbunden wird. Diese Kaffeekapsel wird in eine hier schematisch dargestellte Brühkammer 12 eingeführt, in der sie von einer Flüssigkeit, beispielsweise Wasser, durchströmt wird. Dabei wird das Getränkerohmaterial extrahiert oder aufgelöst und dadurch das gewünschte Getränk erzeugt. Erfindungsgemäß weist diese Portionskapsel nun eine Kennung auf, mit der feststellbar ist, ob die jeweilige Portionskapsel für die in dem Kaffeeautomaten vorgesehene Brühkammer und die eingestellten Prozeßparameter geeignet ist. Ist dies nicht der Fall, können sich signifikante Sicherheitsprobleme ergeben. Beispielsweise kann durch den Einsatz einer falschen Portionskapsel die Dichtheit der Brühkammer gefährdet werden, so dass beispielsweise heißes Wasser unter einem hohen Druck aus dem Kaffeeautomaten austritt und dadurch einen Benutzer gefährden kann. Andererseits ist es auch vorstellbar, dass der Kaffeeautomat selbst durch den Einsatz einer falschen Portionskapsel beschädigt wird. In dem vorliegenden Beispiel handelt es sich bei der Kennung um mehrere erhabene Bereiche 8, die andere Reflexionseigenschaften aufweisen, als der dazwischen liegende Bereich. Diese Ausbuchtungen 8 werden, wie durch die Pfeile dargestellt, an einem Detektionsmittel hier einem optischen Detektionsmittel vorbeigeführt, das die erhabenen Bereiche und/oder die unterschiedlichen optischen Eigenschaften, beispielsweise Strahlungsreflexionseigenschaften, der unterschiedlichen Bereiche 5, 6 erkennt. Der Wechsel zwischen diesen unterschiedlichen Bereichen bzw. die Anzahl der Ausbuchtungen 8 ist die Kennung. Nachdem die Kennung erfasst worden ist, wird diese mit einer Referenzkennung verglichen und für den Fall, dass diese gleich sind, die Inbetriebnahme des Kaffeeautomaten zugelassen. Für den Fall, dass diese nicht übereinstimmen, wird insbesondere die Inbetriebnahme der Pumpe verhindert, die beispielsweise heißes Wasser durch die Brühkammer drückt.

Diese Ausführungen betreffend die Kennung gelten für alle weiteren Beispiele.

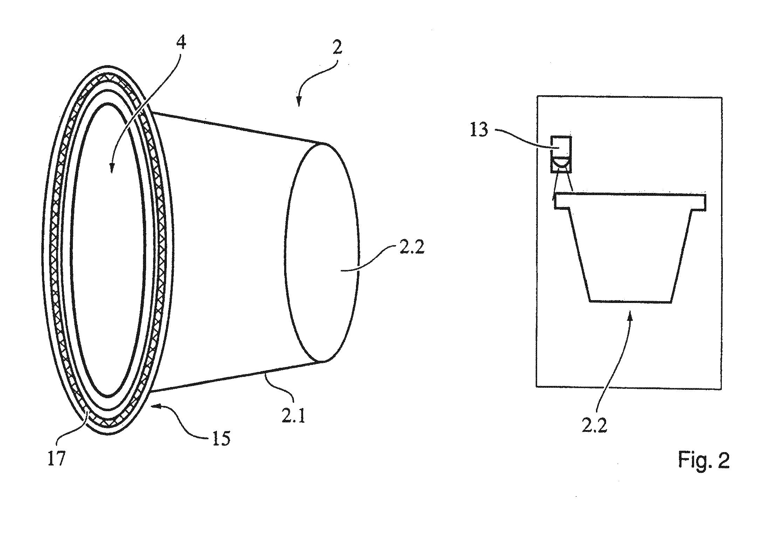

Figur 2 zeigt eine weitere Ausführungsform der erfindungsgemäßen Portionskapsel. In dem vorliegenden Fall weist diese im Bereich der Oberseite der Membran einen Barcode auf. Dieser Barcode kann aufgedruckt durch einen Materialabtrag oder mit in der Folie vorhandenen optisch erkennbaren Mitteln, beispielsweise Fluoreszenzmitteln, hergestellt werden. Alternativ können entsprechende Metallringe Teil der Folie sein oder auf der Folie angebracht werden. Die Bereiche des Barcodes können auch aus einem ferromagnetischen Material bestehen. Alternativ kann der Barcode wie durch den Pfeil 15 symbolisiert an der der Membran abgewandten Seite des Randbereichs des Basiselementes vorgesehen werden. Dieser Barcode wird von einem Detektor 13 ausgelesen, beispielsweise in einem Einwurfschacht.. Der Barcode stellt die erfindungsgemäße Kennung dar.

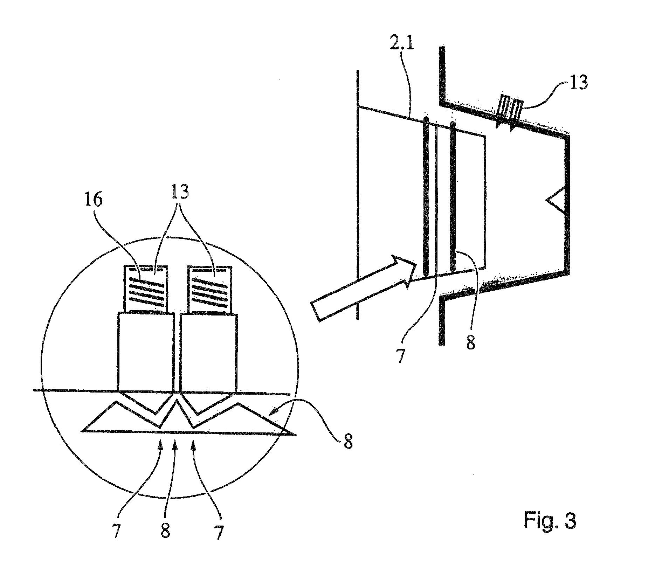

**Figur 3** zeigt eine weitere Ausführungsform der erfindungsgemäßen Portionskapsel. In dem vorliegenden Fall besteht die Kennung aus Einbuchtungen bzw. Ausbuchtungen die durch Materialabtrag oder durch Umformen in die Portionskapsel, hier in deren Wandung 2.1, eingebracht werden. Diese Ein- oder Ausbuchtungen wirken in dem vorliegenden Fall mit schlüsselartig funktionierenden Detektionsmitteln 13 zusammen, wobei in dem vorliegenden Fall der Kaffeeautomat nur dann in Betrieb zu nehmen ist, wenn alle Elemente 13 in einer entsprechenden Einbuchtung platziert sind. Dadurch wird beispielsweise ein Stromkreis verändert, insbesondere geschlossen.

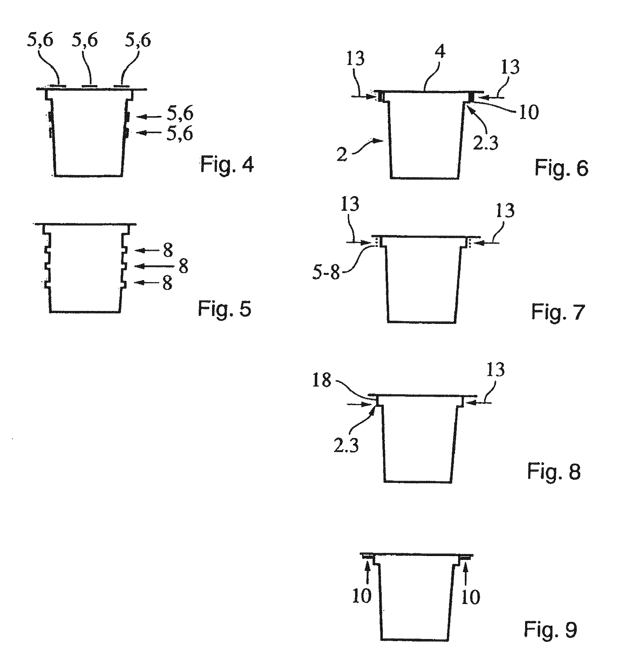

**Figur 4** zeigt im Wesentlichen die Ausführungsform gemäß Figur 1, wobei in dem vorliegenden Fall auch noch die Alternative dargestellt ist, dass die unterschiedlichen optischen Bereiche auf der Deckelfolie angeordnet sind, beispielsweise in Form eines Barcodes.

**Figur 5** zeigt eine Alternative zu der Ausführungsform gemäß Figur 3. Auch hier stellen die Ausbuchtungen 8 die Bärte eines Schlüssels dar. Der Kaffeeautomat ist nur dann in Betrieb nehmbar, wenn diese Ausbuchtungen mit entsprechenden Einbuchtungen zusammenwirken und dadurch beispielsweise einen Stromkreis entsprechend verändert wird. Dieses System kann nicht nur in der Brühkammer, sondern beispielsweise auch in dem Einführschacht für die Portionskapsel vorgesehen werden.

**Figur 6** zeigt eine Ausführungsform, bei der ein elektrisches Material in einem umlaufenden Ring, der vorzugsweise erhaben sein kann, vorgesehen ist. Das elektrisch leitende Material wird beispielsweise mit in einem Einwurfschacht angeordneten elektrischen Schleifkontakten während des Kapseleinwurfs abgetastet, die elektrische Kontakte eines Steuerstromkreises sind.

**Figur 7** zeigt die Ausführungsform gemäß Figur 6, wobei in dem vorliegenden Fall in dem Ringbereich reflektierende oder stumpfe Zonen vorgesehen sind, beispielsweise in Form von Belägen und von in einem Einwurfschacht angeordneten optischen Mitteln während des Kapseleinwurfs ausgelesen, die Teile eines Steuerstromkreises sind.

**Figur 8** zeigt einen vergleichsweise breiten erhabenen Ring als Kennung. Der Einwurfschacht ist mit einer entsprechenden Einwurflehre versehen, die erkennt, ob die Portionskapsel die geforderte Kennung aufweist. Der verbreiterte Ring wird beispielsweise von den in einem Einwurfschacht angeordneten mechanischen Fühlern während des Kapseleinwurfs abgetastet, die elektrische Kontakte eines Stromkreises schließen.

**Figur 9** zeigt eine weitere Ausführungsform der erfindungsgemäßen Portionskapsel. In dem vorliegenden Fall ist die Rückseite des Randbereichs mit einem elektrisch leitenden Belag versehen und wird während des Kapseleinwurfes von in dem Einwurfschacht angeordneten elektrischen Schleifkontakten abgetastet, die elektrische Kontakte eines Steuerstromkreises sind.

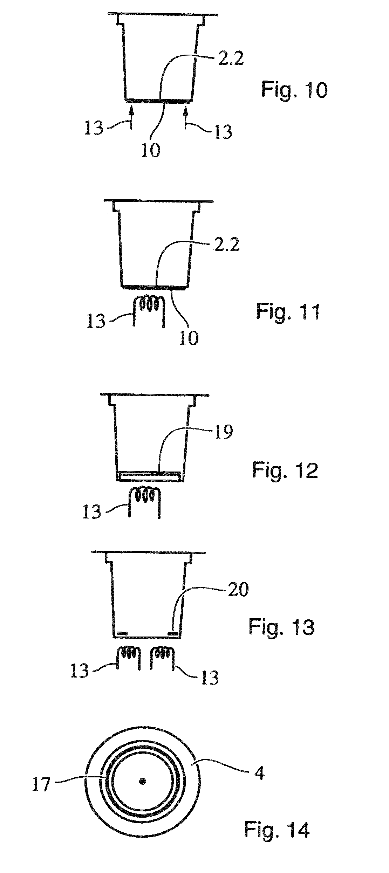

**Figur 10** zeigt eine weitere Ausführungsform der erfindungsgemäßen Portionskapsel, die in dem vorliegenden Fall mit einem elektrisch leitenden Belag versehen ist, beispielsweise einem Leitlackbelag oder einer Alufolie. Die Abtastung erfolgt während des Kapseleinwurfes mit elektrischen Schleifkontakten, die elektrische Kontakte eines Steuerstromkreises sind.

Bei der Ausführungsform gemäß **Figur 11** weist die Kapsel hier der Boden ebenfalls einen elektrisch leitenden Belag auf, der während des Kapseleinwurfes eines im Schacht angeordneten, beispielsweise induktiven, Metallsuchsensors erkannt wird.

Bei der Ausführungsform gemäß **Figur 12** ist ein metallisches Einbauelement, hier ein Sieb 19, vorgesehen, das ebenfalls von einem Metalldetektor als Kennung erkannt werden kann.

Bei der Ausführungsform gemäß **Figur 13** ist ein ferromagnetisches Material, hier am Kapselboden vorgesehen. Das Auslesen der Kennung erfolgt beispielsweise während des Einwurfs der Kapsel mittels eines im Einwurfschacht angeordneten Magneten. Das ferromagnetische Material dient hier als Kennung.

**Figur 14** zeigt noch einmal eine Ausführungsform, bei der ein Barcode im Bereich der Deckelfolie vorgesehen ist.

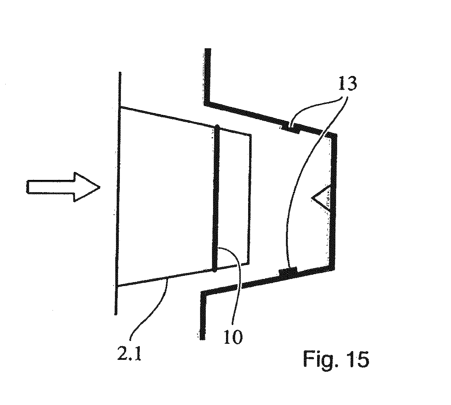

Bei der Ausführungsform gemäß **Figur 15** ist ein metallischer Ring in der Wandung vorgesehen und schließt einen im Bereich der Brühkammer vorgesehenen Stromkreis.

**Figur 16** zeigt eine weitere Ausführungsform der erfindungsgemäßen Portionskapsel 1. Diese weist ein Basiselement 2 auf, das in dem vorliegenden Fall im Wesentlichen konisch vorgesehen ist und das eine Wandung 2.1 und einen Bodenbereich 2.2 aufweist. In diesem Basiselement werden das Rohmaterial sowie gegebenenfalls Einbauten vorgesehen, hier ein Filter. Der Fachmann versteht, dass in dem Basiselement auch andere Einbauten vorgesehen sein können. An dem dem Bodenbereich 2.2 gegenüberliegenden Ende des Basiselementes ist ein kreisringförmig vorgesehener Randbereich/Flansch 2.4 angeordnet, an den beispielsweise eine Deckelfolie gesiegelt wird. Dieser Randbereich 2.4 weist in seinem Außenbereich (äußerer Umfang) ein Form- und/oder Reibschlussmittel und/oder ein Detektionsmittel 2.4.2 auf. In dem vorliegenden Fall ist dieses Mittel 2.4.2, wie insbesondere den Figuren 17a - 17c entnommen werden kann, ein Zahnkranz 2.4.2, der beispielsweise durch die Anordnung einer Vielzahl von äquidistanten Einbuchtungen/Rillen erhalten wird, die in dem Randbereich vorgesehen werden. Innenliegend von diesem Zahnkranz ist in dem Randbereich 2.4 vorzugsweise eine Dichtungsfläche 2.4.1 vorgesehen, die mit einer Dichtung 21, die an der Brühkammer 27 angeordnet ist, dichtend zusammenwirkt. Diese Dichtung 21 sorgt dafür, dass Wasser, das durch den Wassereinlauf 28 strömt, in eine Öffnung der Kapsel, die durch den Aufstechdorn 29 hergestellt wird, in die Kapsel hinein und nicht um diese herum strömt.

**Figuren 17a -** 17c zeigen unterschiedliche Ausführungsformen des Mittels 2.4.2. Bei der Ausführungsform gemäß Figur 17a sind an dem Zahnkranz fünfundvierzig Zähne vorgesehen, bei der Ausführungsform gemäß Figur 17b und bei der Ausführungsform gemäß Figur 17c zweiundzwanzig bzw. neunundzwanzig Zähne. Der Fachmann versteht, dass die resultierenden Zähne jede beliebige Form aufweisen können. Alle Figuren 17a - 17c zeigen wie die Portionskapsel 1 mittels zweier Haltearme 30 an einem Teil der Brühkammer 27 gehalten werden. Diese Haltearme 30 wirken mit dem Mittel 2.4.2 zusammen. Wäre dies nicht vorhanden, könnten die Haltearme die Kapsel nicht halten und die Kapsel könnte nicht in die Brühkammer eingeführt werden sondern würde in einen darunter liegenden Abwurfbehälter durchfallen. Die Haltearme 30 wirken folglich auch als Lehre.

**Figur 18** zeigt das Mittel 2.4.2 im Zusammenspiel mit einem Formschlussmittel 24, hier einem Ritzel, das an dem Kaffeeautomaten vorgesehen ist. Dieses Formschlussmittel 24 ist in dem Einwurfschacht 26 vorgesehen, der eine Einwurfschachtöffnung 22 aufweist, durch die die Portionskapsel in den Kaffeeautomaten eingeworfen wird. Der Abstand zwischen der Kapselinnenwand 25 und dem Ritzel 24 ist so bemessen, dass die Portionskapsel den Einwurfschacht nur dann passieren kann, wenn die Formschlussmittel 2.4.2 komplementär zu den Zähnen des Ritzels 27 sind. Nur dann ist es möglich, dass die Portionskapsel bei ihrer Fallbewegung, die durch den Pfeil dargestellt ist, das Ritzel 24 in Rotation versetzt, wie ebenfalls durch einen Pfeil dargestellt. Erst durch diese Rotation kann die Portionskapsel den Einwurfschacht passieren und in die vorgesehene Position hineinfallen. Weist die Portionskapsel keine oder falsche Formschlussmittel 2.4.2 auf, kann die Kapsel nicht durch den Einwurfschacht in die vorgesehene Position gebracht werden. An dem Ritzel 24 kann zusätzlich oder alternativ ein Geber vorgesehen sein, der dessen Drehbewegung erfasst und an eine Steuerung weiterleitet. Umfasst diese Drehbewegung mindestens ein vorgegebenes Drehsegment schaltet die Steuerung beispielsweise die Brüheinheit frei. Der Fachmann erkennt, dass an dem Kapselrand auch Reibschlussmittel vorgesehen sein können, die reibschlüssig mit einem Mittel, beispielsweise einem Rand, zusammenwirken und dieses antreiben, wobei diese Bewegung wiederum erfasst und dadurch die Brühkammer freigeschaltet wird.

Weiterhin erkennt der Fachmann, dass beispielsweise in dem Einwurfschacht auch ein Sensor, beispielsweise eine Kamera, vorgesehen sein kann, die die Form des Mittels 2.4.2 erfasst. Beispielsweise könnten in dem vorliegenden Fall die Form und/oder der Abstand der Zähne erfasst werden. Dieses Signal wird wiederrum an eine Steuerung geleitet, die beispielsweise die Brühkammer freigibt, wenn es sich um die richtige Kapsel handelt.

In Figur 19 ist schematisch eine Ansicht einer weiteren Ausführungsform einer erfindungsgemäßen Portionskapsel gemäß einer Ausführungsform der vorliegenden Erfindung dargestellt. In Figur 20 ist ebenfalls schematisch eine Ansicht einer solchen Portionskapsel dargestellt, wobei jedoch eine andere perspektivische Ansicht gewählt ist. Hierbei zeigt die Figur 19 eine Ansicht einer Portionskapsel von vorne. Die Figur 20 zeigt eine Ansicht der Portionskapsel von schräg unten. Die Portionskapsel ist in allen Figuren mit dem Bezugszeichen 1 bezeichnet. Die Portionskapsel 1 weist ein im Wesentlichen kegelstumpfförmiges Basiselement 2 auf, welches topfähnlich ausgeformt ist und einen Hohlraum 3 umschließt. Der Hohlraum 3 wird von einer Membran 4 verschlossen. Die Blickrichtung gemäß der Figur 1 ist im Wesentlichen parallel zur Erstreckungsebene der Membran 4, sodass die Membran 4 lediglich am oberen Rand der Portionskapsel angedeutet ist. Das Basiselement 2 umfasst insbesondere ein weiches, halbstarres oder starres Kunststoffmaterial welches vorzugsweise tiefgezogen wurde. Die Membran 4 umfasst vorzugsweise eine dünne Kunststoff- oder eine Aluminiumfolie. Das Basiselement weist im Bereich der Membran einen bevorzugt umlaufenden Befestigungsflansch 17 auf, wobei die Membran 4 mit dem Befestigungsflansch 17 stoffschlüssig verbunden, insbesondere verschweißt oder verklebt ist. Innerhalb des Basiselements 2 bevorzugt ist ein Filterelement angeordnet, welches jedoch in den Figuren nicht eigens dargestellt ist. Das Filterelement ist beispielsweise aus einem thermoplastischen Kunststoff, beispielsweise Polypropylen, hergestellt. Das Filterelement kann auch in Form eines Vliesmaterials hergestellt sein, beispielsweise aus einem thermoplastischen Kunststoff. Das Filterelement unterteilt den Hohlraum 3 bevorzugt in einen ersten Bereich und in einen zweiten Bereich wobei der erste Bereich zur Aufnahme eines Getränkerohmaterials vorgesehen ist und wobei der zweite Bereich zur Aufnahme und insbesondere zum Sammeln eines nicht abgebildeten Getränkeextrakts während des Extraktionsvorgangs der Portionskapsel 1 vorgesehen ist. Der erste und zweite Bereich ist jedoch in den Figuren nicht einzeln dargestellt.

Die Portionskapsel 1 ist dafür vorgesehen, in eine Brühkammer einer nicht gezeigten Vorrichtung zur Herstellung eines Getränks eingesetzt zu werden. Eine solche Vorrichtung zur Herstellung eines Getränks ist insbesondere eine Kaffeemaschine bzw. ein Kaffeeautomat; es kann sich jedoch bei der Vorrichtung zur Herstellung eines Getränks auch um eine Maschine zur Herstellung eines Teegetränks, eines Schokoladengetränks oder sonstiger Getränke handeln. In einer Brühkammer einer solchen Vorrichtung zur Herstellung eines Getränks wird der Portionskapsel eine Extraktionsflüssigkeit vorzugsweise unter hohem Druck zugeführt, insbesondere Wasser bzw. heißes Wasser. Diese Extraktionsflüssigkeit wechselwirkt mit dem Getränkerohmaterial innerhalb der Portionskapsel so, dass sich ein Getränkeextrakt bzw. ein Getränk bildet. Das Filterelement dient bei diesem Extraktionsvorgang insbesondere als ein Sieb für das Getränkeextrakt.

Das Basiselement 2 weist erfindungsgemäß einen Wandungsbereich 12 und einen Bodenbereich 11 auf. Der Wandungsbereich 12 erstreckt sich im Wesentlichen zwischen dem Flansch 17 und dem Bodenbereich 11. In den Wandungsbereich 12 ist eine Mehrzahl von Rillen 15 eingebracht, welche insbesondere als in den Wandungsbereich 12 eingebrachte und in Form von dem Hohlraum 3 zugewandte im Wesentlichen längs zwischen dem Flansch 17 und dem Bodenbereich 11 sich erstreckende (d. h. im Wesentlichen in der Darstellung nach Figur 19 senkrecht verlaufende) Nuten ausgebildet sind. Insbesondere ist es erfindungsgemäß vorgesehen, dass die Rillen 15 sich entlang dem Wandungsbereich 12 vertikal erstrecken, d. h. in gerader Richtung vom Flansch 17 aus zum Bodenbereich 11 hin, wobei sich jedoch die Rillen nicht zwingend über die gesamte Länge erstrecken. Die Rillen 15 sind erfindungsgemäß derart ausgebildet, dass der Wandungsbereich 12 durch die Mehrzahl der Rillen 15 verstärkt bzw. versteift wird. Darüber hinaus wird durch die Mehrzahl der Rillen 15, welche insbesondere über den Wandungsbereich 12 verteilt angeordnet sind, eine Anhaftung zwischen dem Wandungsbereich 12 und der Wandung der Brühkammer der Vorrichtung zur Herstellung eines Getränks nach dem Extraktionsvorgang verhindert, wodurch ein automatisches Auswerfen der Portionskapsel 1 aus der Brühkammer erleichtert wird. Die in Figur 19 dargestellte Ausführungsform der Portionskapsel 1 weist ferner einen umlaufenden Absatz 16 auf, welcher in dem Wandungsbereich 12 zwischen dem Flansch 17 und dem Bodenbereich 11 angeordnet ist und zwar an den Flansch 17 anschließend in Richtung zum Bodenbereich 11 hin. Der Absatz 16 weist gegenüber dem restlichen Wandungsbereich 12, der sich zwischen dem Absatz 16 und dem Bodenbereich 11 befindet, einen vergrößerten Durchmesser (parallel zur Membran 4) auf. Die Kontur des Absatzes 16 ist vorzugsweise derart ausgebildet, dass der Durchmesser des Absatzes 16 sich in Richtung des Flansches 7 hin etwas verringert.

Bei der in Figur 19 dargestellten Ausführungsform der erfindungsgemäßen Portionskapsel 1 ist es vorgesehen, dass die Rillen 15 sich in einem ersten Teilbereich der Rillen 15 im Bereich des Absatzes 16 erstrecken und in einem weiteren Teilbereich der Rillen 15 vom Absatz 16 zum Bodenelement 11 hin ein Stück entlang des restlichen Wandungsbereichs 12 erstrecken, dann jedoch enden. Insgesamt erstrecken sich beispielsweise die Rillen 15 über etwa 50 % der Erstreckung des Wandbereichs zwischen dem Flansch 17 und dem Bodenbereich 11, wobei etwa ein Drittel der Erstreckung der Rillen 15 im Bereich des Absatzes 16 verläuft und die restlichen zwei Drittel der Erstreckung der Rillen 15 sich im restlichen Wandungsbereich 12 zwischen dem Absatz 16 und dem Bodenbereich 11 erstreckt.

In Figur 21 ist schematisch eine Schnittansicht der erfindungsgemäßen Portionskapsel 1 entlang der Höhenerstreckung der Portionskapsel, d. h. mit einer Schnittfläche senkrecht zur Erstreckungsebene der Membran 4 dargestellt. In Figur 22 ist ferner eine Schnittansicht der erfindungsgemäßen Portionskapsel 1 dargestellt, mit einer Schnittebene, die parallel zur Erstreckung der Membranebene verläuft. Erkennbar ist, dass in Figur 21 die Innenseite des Hohlraums der Portionskapsel 1 dargestellt ist. Das Material der Portionskapsel 1 bzw. des Basiselements 2 der Portionskapsel 1 ist derart dünn ausgebildet, dass die Realisierung der Rillen 15 auf der in Figur 19 dargestellten Außenseite entsprechende korrespondierende Ausformungen bzw. Eindellungen auf der Innenseite nach sich ziehen. In Figur 22 ist besonders die Realisierung der zahnradförmigen Kontur 15' sichtbar, die sich durch die Einbringung der Rillen 15 in den Wandungsbereich 12 der Portionskapseln 1 ergibt.

### Bezugszeichenliste:

- 1: Portionskapsel
- 2: Basiselement
- 2.1: Wandung
- 2.2: Bodenbereich
- 2.3: umlaufender Ring
- 2.4: Randbereich, Flansch
- 2.4.1: Dichtungsbereich
- 2.4.2: Formschlussmittel, Reibschlussmittel und/oder Detektionsmittel
- 3: Hohlraum
- 4: Membran
- 5: glänzende Fläche
- 6: matte Fläche
- 7: Einbuchtung
- 8: Ausbuchtung
- 9: Aufdruck
- 10: elektrisch leitender Bereich
- 11: metallischer Bereich, Bodenbereich
- 12: Brühkammer, Wandungsbereich
- 13: Detektionsmittel, Scanner. Fühler
- 14: Strahl
- 15: Randbereich, Rillen
- 16: Federmittel, Absatz
- 17: Barcode, Befestigungsflansch
- 18: Dimension der Portionskapsel
- 19: Einbauelement, Sieb
- 20: ferromagnetischer Bereich
- 21: Dichtung
- 22: Einwurfschachtöffnung
- 23: Einwurfschachtgehäuse
- 24: Formschlussmittel, Ritzel
- 25: Einwurfschachtinnenwand
- 26: Einwurfschacht
- 27: Brühkammer
- 28: Wassereinlauf
- 29: Aufstechdorn
- 30: Haltemittel

## Patentansprüche

1. Portionskapsel (1) zur Herstellung eines Getränks mit einem Basiselement (2), das einen Hohlraum (3) aufweist, in dem ein Getränkerohmaterial vorgesehen ist und der von einer Membran (4) verschlossen wird, die an dem Basiselement befestigt ist, wobei sie eine Kennung (5) aufweist, die es ermöglicht die jeweilige Portionskapsel zu individualisieren und wobei sie einen Randbereich und/oder Flansch (2.4) aufweist, **dadurch gekennzeichnet, dass** in dem Randbereich und/oder Flansch (2.4), insbesondere an dessen äußerem Umfang, zumindest abschnittsweise, ein Formschluss-, Reibschlussmittel und/oder Detektionsmittel (2.4.2) vorgesehen ist und das Formschluss-, Reibschlussmittel und/oder Detektionsmittel (2.4.2) ein Zahnkranz oder Zahnkranzsegment ist.

2. Portionskapsel (1) nach Anspruch 1, **dadurch gekennzeichnet, dass** die Zähne des Zahnkranzes oder des Zahnkranzsegmentes im wesentlichen dreiecksförmig, rechteckförmig, quadratisch, oder wellenförmig vorgesehen sind.

3. Portionskapsel nach einem der Ansprüche 1 oder 2, **dadurch gekennzeichnet, dass** an dem Randbereich und/oder Flansch (2.4) eine Dichtfläche (2.4.1) vorgesehen ist.

4. Portionskapsel (1) nach einem der Ansprüche 1 - 3, **dadurch gekennzeichnet, dass** die Kennung Flächenbereiche (5, 6) mit unterschiedlichen Reflexionseigenschaften umfasst.

5. Portionskapsel (1) nach einem der Ansprüche 1 - 4, **dadurch gekennzeichnet, dass** die Kennung eine Einbuchtung (7) und/oder eine Ausbuchtung (8) aufweist.

6. Portionskapsel (1) nach einem der voranstehenden Patentansprüche, **dadurch gekennzeichnet, dass** die Kennung ein maschinenlesbarer Aufdruck (9) ist.

7. Portionskapsel (1) nach einem der voranstehenden Patentansprüche, **dadurch gekennzeichnet, dass** die Kennung ein elektrisch leitender Bereich (10) ist.

8. Portionskapsel (1) nach einem der voranstehenden Patentansprüche, **dadurch gekennzeichnet, dass** die Kennung ein metallischer Bereich (11) ist.

9. Portionskapsel (1) nach einem der voranstehenden Patentansprüche, **dadurch gekennzeichnet, dass** die Kennung ein ferromagnetischer Bereich (12) ist.

10. Portionskapsel (1) nach einem der voranstehenden Patentansprüche, **dadurch gekennzeichnet, dass** die Kennung ein RFID ist.

11. Portionskapsel (1) nach einem der voranstehenden Patentansprüche, **dadurch gekennzeichnet, dass** die Kennung ein Barcode (17) ist.

12. Portionskapsel (1) nach einem der voranstehenden Patentansprüche, **dadurch gekennzeichnet, dass** sie ein Einbauelement (19) mit einer Kennung aufweist.

13. Portionskapsel (1) nach einem der vorhergehenden Ansprüche, **dadurch gekennzeichnet, dass** zumindest in einem Teilbereich in einer Ebene parallel zur Haupterstreckungsebene der Membran (4) eine zahnradförmige Kontur aufweisen.

14. Portionskapsel (1) nach einem der vorhergehenden Ansprüche, **dadurch gekennzeichnet, dass** ein Basiselement (2) im Bereich des Absatzes (16) einen größeren Durchmesser aufweist als im Wandungsbereich (12) zwischen dem Absatz (16) und dem Bodenbereich (11).

15. Portionskapsel (1) nach Anspruch 14, **dadurch gekennzeichnet, dass** zumindest in einem Teilbereich in einer Ebene parallel zur Haupterstreckungsebene der Membran (4) eine zahnradförmige Kontur derart aufweisen, dass sich die zahnradförmige Kontur (15') zumindest teilweise im Bereich des Absatzes (16) erstreckt.

16. Portionskapsel (1) nach einem der Ansprüche 14 oder 15, **dadurch gekennzeichnet, dass** das Basiselement (2) sich im Bereich des Absatzes (16) in Richtung zum Flansch (17) hin verjüngt.

17. Portionskapsel (1) nach einem der Ansprüche 14 bis 16, **dadurch gekennzeichnet, dass** ein Verhältnis des Durchmessers des an den Flansch (7) angrenzenden Wandungsbereichs (12), einerseits zum Durchmesser des Flansches (7), andererseits zwischen 0,85 und 0,89 vorgesehen ist, insbesondere im Wesentlichen 0,87 beträgt.

18. Portionskapsel (1) nach einem der Ansprüche 14 bis 17, **dadurch gekennzeichnet, dass** der Durchmesser des an den Flansch (7) angrenzenden Wandungsbereichs (12) im Wesentlichen 39 Millimeter und/oder der Durchmesser des Flansches (7) im Wesentlichen 45 Millimeter beträgt.

19. Portionskapsel (1) nach einem der Ansprüche 14 bis 18, **dadurch gekennzeichnet, dass** das Basiselement (2) im Bereich des Absatzes eine größere Wandstärke aufweist als im Wandungsbereich (12) zwischen dem Bodenbereich (12) und dem Flansch (17).

20. Portionskapsel (1) nach einem der vorhergehenden Ansprüche, **dadurch gekennzeichnet, dass** innerhalb des Hohlraums (3) ein Filterelement angeordnet ist, welches den Hohlraum (3) in einen ersten Bereich (8) zur Aufnahme des Getränkerohmaterials und in einen zweiten Bereich (9) zur Aufnahme eines Getränkeextrakts unterteilt.

21. Verwendung einer Portionskapsel (1) nach einem der vorhergehenden Ansprüche zur Herstellung eines Heißgetränks.
